# EUROPEAN PATENT APPLICATION

(11) **EP 0 568 735 A1**
(43) Date of publication of application: **10.11.1993**
(21) Application number: 92201053.3
(22) Date of filing: 08.05.1992
(51) Int. Cl.: B65G 57/26

(54) **Pattern forming device and stacking device**

(71) Applicant: E.P.V. Europäische Patentverwertungs A.G., FL-9490 Vaduz (LI)
(72) Inventor: Vanhoutte, Jan Eric Rene, B-8310 Brugge (BE); Izaks, Herman Berend, NL-7151 ZW Eibergen (NL)
(74) Representative: Morel, Christiaan F., Ir.Dr.

(57) **Abstract**

The invention provides a device (1) for stacking in a desired pattern objects (3) such as boxes, stacks of flats, whether or not bundled into one unit, in particular for forming a pattern with at least one row of three objects (3) with mutual clearance and at least one row of two objects (3) with mutual clearance such that the sides of a stack lie in flat planes, which device comprises a feed conveyor (2) with rotation means (16) which can selectively rotate supplied objects (3) through a chosen angle in the horizontal plane.

## Description

The invention lies in the field of forming patterns of objects in one plane and stacking these flat patterns onto each other to form a stack, for example for loading pallets.

When stacking objects for example which have to be subjected to a thermal treatment, for example objects for cooling or the like, it can be of utmost importance that the loading takes place with some mutual clearance between the objects in order to enable cooling air to pass between the objects. It is further of great importance that the loading of for instance a pallet takes place such that the side surfaces of the stack of objects corresponds exactly with the side edges of the pallet or at least do not protrude beyond them.

With respect to the above-stated objectives the invention provides a device for stacking in a desired pattern objects such as boxes, stacks of flats, whether or not bundled into one unit, in particular for forming a pattern with at least one row of three objects with mutual clearance and at least one row of two objects with mutual clearance such that the sides of a stack lie in flat planes, which device comprises a feed conveyor with rotation means which can selectively rotate supplied objects through a chosen angle in the horizontal plane.

In a particular embodiment the device has the special feature that the rotation means comprise a freely rotatable rough rotation head for up and downward movement in the feed conveyor, which can grip a passing object on one side by upwardly directed displacement such that on the other side the object is further transported by the feed conveyor, whereby a rotation of the object takes place until the head moves downward again.

A very high handling speed of simultaneously supplied objects can be obtained with an embodiment wherein two rotation heads are present at the same longitudinal position.

Use could be made for example of a video camera which detects a passing object from the top and deprives the rotation means of actuation at the moment it is observed that a desired rotation has been achieved. Since in many cases this involves a rotation through exactly 90°, it is however recommended not to have to use complicated and expensive means such as video cameras with associated pattern recognition systems and control electronics. Use is therefore preferably made of a device wherein the upward movement of the rotation head is controlled by a photocell which detects transversely of the transporting direction, wherein the rotation head is placed at the same longitudinal distance relative to the photocell as the transverse distance relative to the side edge of an object for rotation facing the photocell.

With this arrangement it is ensured under all conditions in a wholly automatic manner that a passing object is rotated through 90°. Detection takes place on the rear edge of a passing object. The photocell notes that it "no longer sees anything" after the object has passed. At that moment the rotation head is energized whereby the object is just lifted above the conveyor, for example a roller conveyor. On the other side continuous transport takes place whereby a rotation takes place relative to the rotation head. Due to the arrangement described, the object has undergone a rotation through exactly 90° at the moment when the rear edge, thus the original side edge of the object, passes over the detecting line of the photocell.

The invention further relates to a described device comprising a pattern forming device for a pattern in one layer with two optionally adjustable side plates and carriers movable relative thereto into a loading position when moved towards each other and an unloading position when moved away from each other.

The carriers can be embodied in various ways. For example the carriers can comprise fingers.

The invention particularly relates to a pattern forming device which can selectively form rows of two or three objects as desired. In this context the invention provides a device wherein the pattern forming device comprises a central pressing member which, by means of downward directed pressure, can fixedly hold the central object in a row of three, while the two outer objects are moved against the side plates by the carriers. This central pressing member only has to press the central object down with a relatively light pressure. The carriers are thus capable of carrying to the side the objects located on the sides, wherein the side plates ensure the sideways registration. As soon as the fingers no longer carry the central object this falls downward over a short distance into its final position. The same applies to the two outer objects: as soon as the two carriers have moved outward the objects fall into their desired position.

The carriers may comprise fingers which are movable up and down between the rollers of a roller conveyor. According to the invention however preference is given to an embodiment wherein the pattern forming device comprises a path through which carriers for the objects are movable up and downward, wherein at the highest position space is present to accommodate the carriers.

Use can finally be made of a vertically movable stack carrier onto which one formed stack at a time can be placed by the pattern forming device, for which purpose the stack carrier can be repeatedly moved downward through the height of an object.

The invention will now be elucidated with reference to the annexed drawing, in which:
Fig. 1 shows a schematic perspective view of a device according to the invention;
Fig. 2 shows a partially broken away perspective view of a second embodiment;
Fig. 3a shows a top view by way of elucidation of the rotation process;
Fig. 3b shows the side view of fig. 3a;
Fig. 4a shows a top view corresponding to fig. 3a in the situation in which an object is rotated;
Fig. 4b shows a side view corresponding to fig. 3b in the situation according to fig. 4a.
Fig. 5a-5h show successive phases of operation for stacking objects in a layer in a desired pattern;
Fig. 6 shows a possible stacking pattern in perspective view; and
Fig. 7 shows a possible alternative stacking pattern.

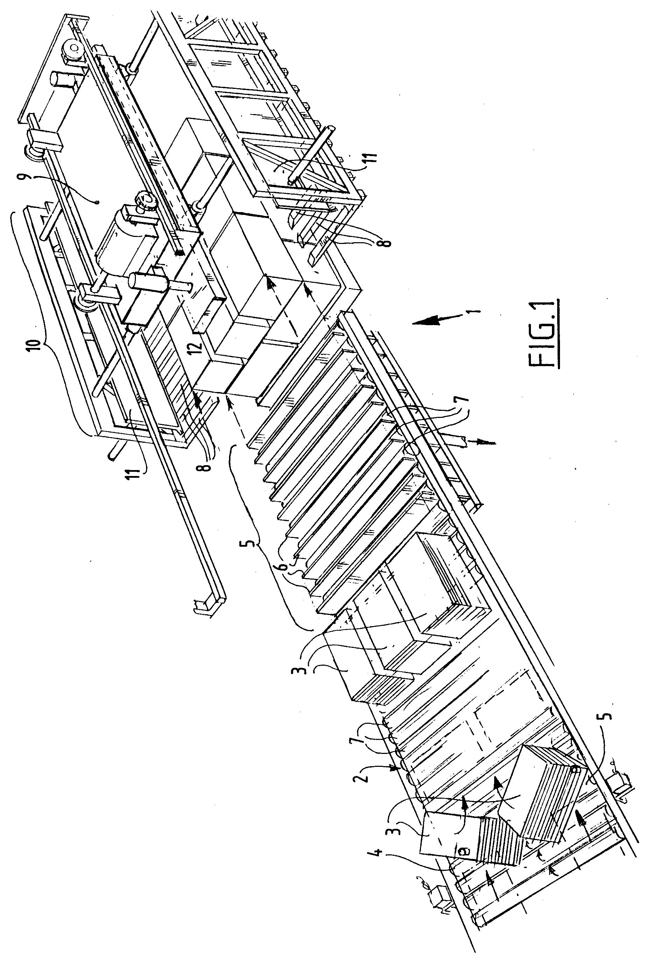

Fig. 1 shows a device 1 according to the invention. This comprises a feed roller conveyor 2 on which objects 3 can be supplied. By means of rotating devices 4, 5 to be described hereinafter the objects can be rotated through 90° in the manner shown on the left-hand side of fig. 1. Three preceding objects are transported further in lengthwise direction without rotation and approach a lifting zone 5 in which plates 6 can lift the objects 3. For this purpose the plates 6 can be raised upward between the rollers 7 by means of lifting means (not shown).

Lifting fingers 8 fit between the plates 6 and can lift up objects raised by the plates 6. The lifting fingers 8 form part of a carriage 9 which can be displaced from the lifting zone 5 to a loading zone 10 where the rows of objects are formed into stacks.

Adjustable side plates 11 serve for the sideways registration of the objects 3 placed at the sides. During outward movement of the fingers 8 a middle object 3 can temporarily be retained by a pressing member 12 which exerts a light vertical pressure on this middle object whereby it is not carried along by the fingers 8 through friction. Only the objects placed at the sides are thus carried along through friction by the fingers 8, wherein the side plates 11 act as side stops.

In this manner a loading pattern can be obtained wherein alternately two or three objects are laid in one row as desired and selectively.

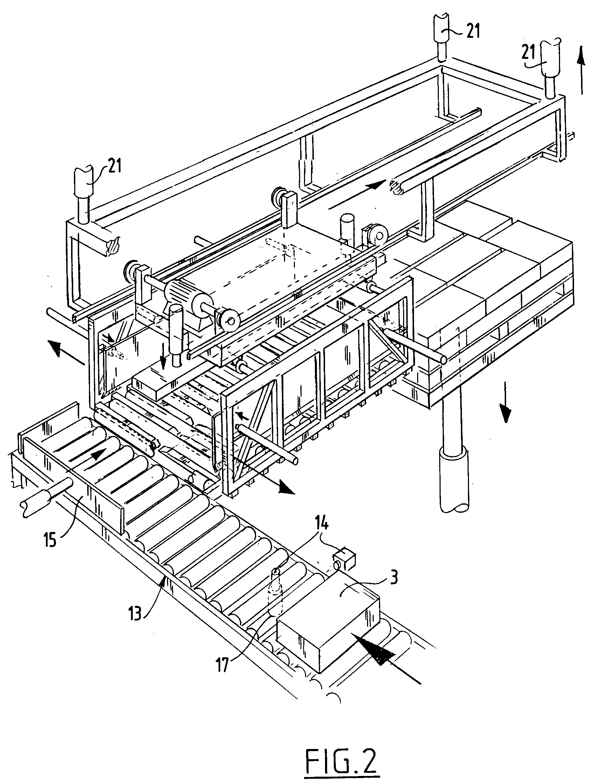

Fig. 2 shows a variant. A relatively narrow feed conveyor 13 is provided with only one rotating device 14 for selectively rotating a supplied object 3 under the control of a control unit (not shown). A pressing member 15 moves the objects 3 to the lifting zone 5 which otherwise corresponds to that according to fig. 1. In the situation shown in fig. 2 the lifting unit with the fingers 8 is situated in the region of the lifting zone while in fig. 1 this carriage 9 is situated in the loading zone 10.

It is noted that for the sake of clarity control mechanisms, cylinders and the like at certain points are not drawn. A central control unit for controlling the device for example with a control programme is not shown here.

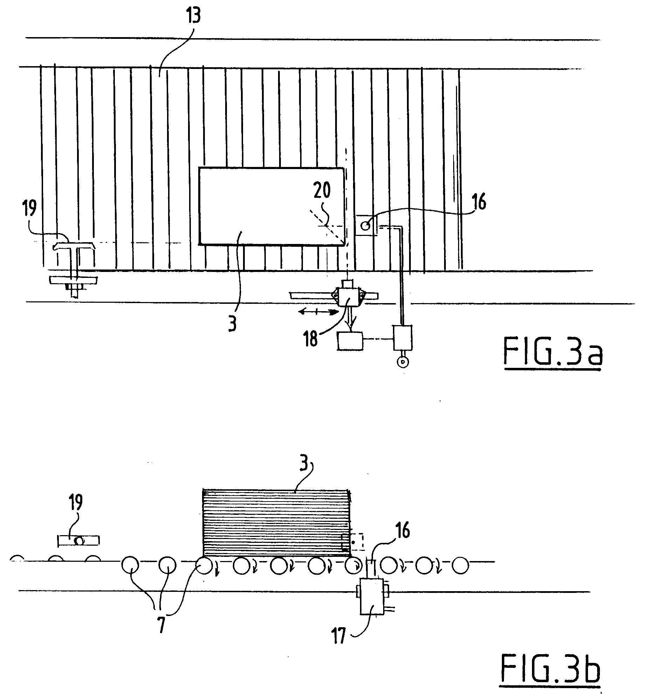

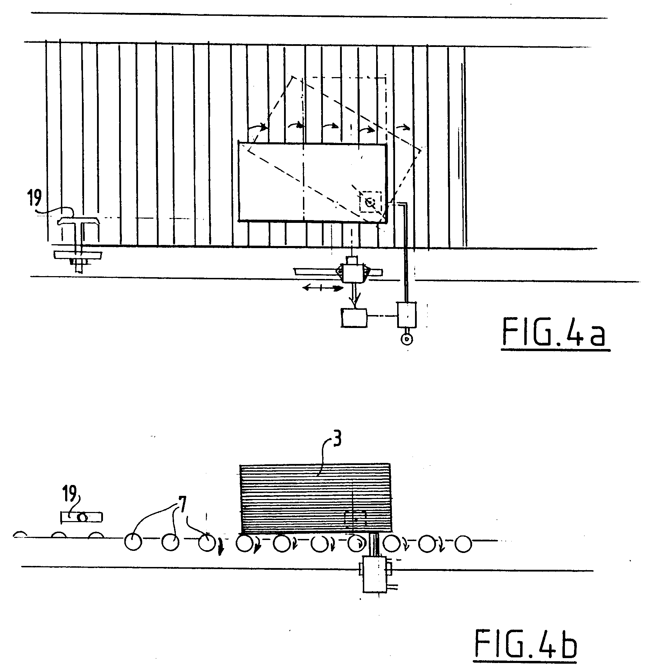

Fig. 3a shows the roller conveyor 13 on which a rotating unit 16 is situated. This comprises a relatively rough top surface which can be moved upward by a lifting cylinder 17. A photocell 18 detects the presence of an object 3, the side edge of which is situated in a position which is determined by a side guide 19. At a position designated with 20 the cylinder 17 is energized and, as according to fig. 4b, the object 3 is lifted up at this position. Because of the continuous movement of the rollers 7 rotation of the object 3 takes place as indicated in fig. 4a. Because use is made of a device wherein the upward movement of the rotating unit 16 is controlled by the photocell 18 which detects transversely of the transporting direction and wherein the rotation head 16 is placed at the same longitudinal distance relative to the photocell 18 as the transverse distance relative to the side edge of the object 3 facing toward the photocell 18, it is automatically ensured that a passing object is turned through exactly 90°.

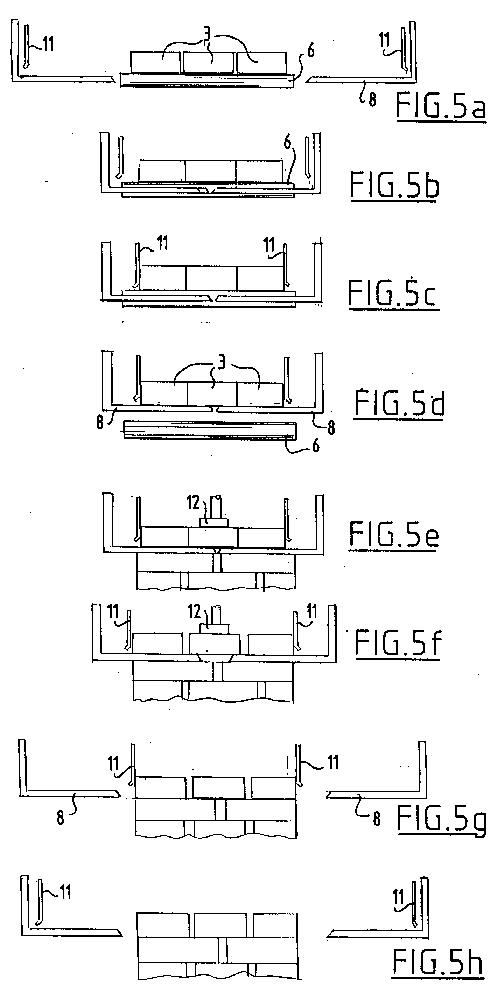

Fig. 5 shows very schematically the operation of the loading zone 10. The objects 3 are carried by carrier plates 6 extending upward between the rollers 7. The space thereby released can be used for accommodating the carrier fingers 8. These move together inward with the side plates 11 inward to beneath the objects 3 (fig. 5b). The carrier plates 11 are then moved inward to define the side surfaces of the stack to be formed. Thereafter the carrier plates 6 are moved down whereby the objects 3 come to rest entirely on the fingers 8. By means of the lifting means 21 depicted schematically in fig. 2 the fingers 8 forming part of the carriage 9 are subsequently moved downward until, after displacement of the carriage 9 from the zone 5 to the zone 10, they are situated above the previously formed stack. The pressing member 12 is moved down to temporarily exert a light hold on the middle object 3 (fig. 5e). The side plates 11 are then moved to their desired side position, which corresponds with the width of the stack for forming, while the middle object is held by the pressing member 12 (fig. 5f).

Finally, the fingers 8 are moved wholly outward and the pressure from the pressing member 12 is removed so that the layer initially carried by the fingers 8 is placed onto the already formed stack. The side plates 11 also are finally moved to their starting position. This is the transition from fig. 5g to fig. 5h. The loading zone is now prepared to receive a new layer and can be returned to the lifting zone 5 as according to fig. 5a.

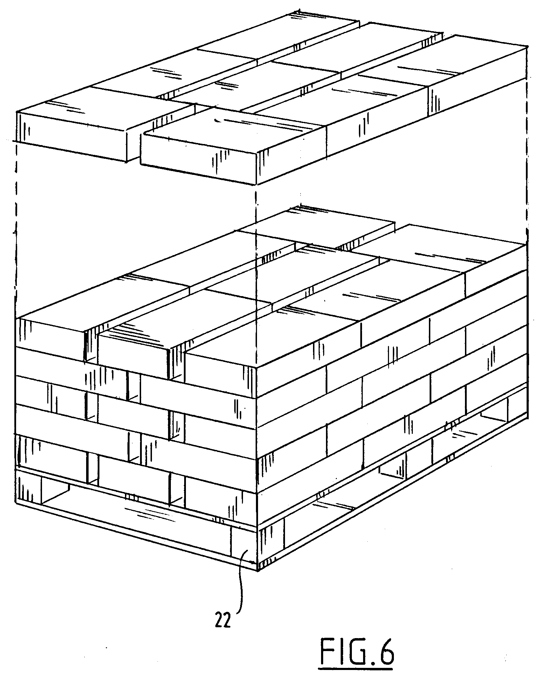

Fig. 6 shows a possible stacking pattern with layers consisting of rows of two and rows of three objects. This figure shows clearly that there are spaces between the objects. This can be important, for example for refrigerated storage on a pallet 22.

Attention is further drawn to the fact that, due to the fully controlled loading method, it can be established with certainty in advance that the objects are for example never situated outside the periphery of the pallet 22 and that their side edges for example exactly coincide therewith. Also ensured is that a pallet is loaded under all conditions in a fully stable and balanced manner.

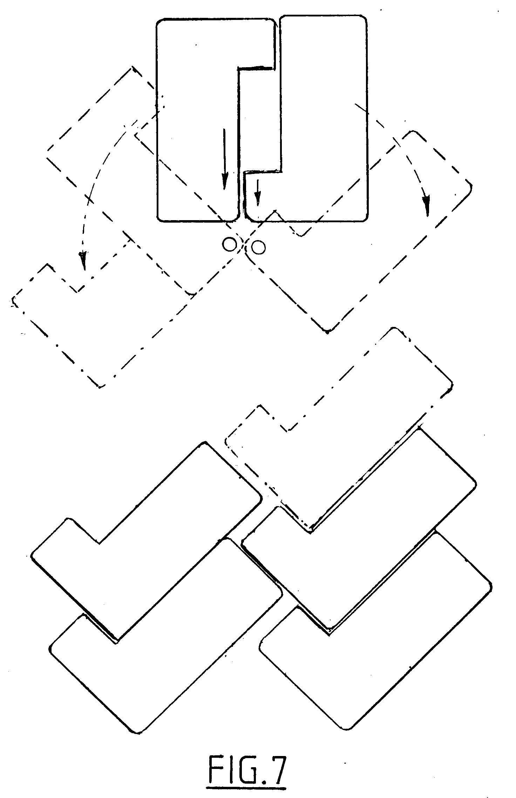

Fig. 7 shows that also (oddly shaped) flats or stacks thereof lend themselves very well to handling by a device according to the invention. Rotation of the objects also takes place here. It will be apparent that this rotation does not have to extend through 90° in all circumstances.

## Claims

1. Device for stacking in a desired pattern objects such as boxes, stacks of flats, whether or not bundled into one unit, in particular for forming a pattern with at least one row of three objects with mutual clearance and at least one row of two objects with mutual clearance such that the sides of a stack lie in flat planes, which device comprises a feed conveyor with rotation means which can selectively rotate supplied objects through a chosen angle in the horizontal plane.

2. Device as claimed in claim 1, wherein the rotation means comprise a freely rotatable rough rotation head for up and downward movement in the feed conveyor, which can grip a passing object on one side by upward directed displacement such that the object is further transported by the feed conveyor on the other side, whereby a rotation of the object takes place until the head is moved down again.

3. Device as claimed in claim 2, wherein two rotation heads are present at the same longitudinal position.

4. Device as claimed in claim 2, wherein the upward movement of the rotation head is controlled by a photocell which detects transversely of the transporting direction, wherein the rotation head is placed at the same longitudinal distance relative to the photocell as the transverse distance relative to the side edge of an object for rotating facing the photocell.

5. Device as claimed in claim 1, comprising a pattern forming device for a pattern in one layer with two optionally adjustable side plates and carriers movable relative thereto to a loading position when moved towards each other and a unloading position when moved away from each other.

6. Device as claimed in claim 5, wherein the carriers comprise fingers.

7. Device as claimed in claim 5, wherein the pattern forming device comprises a central pressing member which by downward directed pressure can fixedly hold the central object in a row of three, while the two outer objects are moved against the side plates by the carriers.

8. Device as claimed in claim 5, wherein the pattern forming device comprises a path through which carriers for the objects are movable up and downward, wherein in the highest position space is present to accommodate the carriers.

9. Device as claimed in claim 5, comprising a vertically movable stack carrier on which one formed stack at a time can be placed by the pattern forming device, for which purpose the stack carrier can repeatedly be moved downward through the height of an object.
